Europäisches Patentamt

European Patent Office

Office européen des brevets

(19)

(11) Publication number: **0 495 108 A1**

## EUROPEAN PATENT APPLICATION
### published in accordance with Art. 158(3) EPC

(12)

(21) Application number: **91904009.7**

(22) Date of filing: **31.07.90**

(86) International application number:
**PCT/SU90/00195**

(87) International publication number:
**WO 92/02596 (20.02.92 92/05)**

(51) Int. Cl.⁵: **C09K 17/00**

(43) Date of publication of application:
**22.07.92 Bulletin 92/30**

(84) Designated Contracting States:
**DE ES FR GB IT**

(71) Applicant: **OBSCHESTVO S OGRANICHENNOI OTVETSTVENNOSTJU " NOVAYA MEKHANIKA"**
**Michurinsky pr., I**
**Moscow, 117192(SU)**

(72) Inventor: **GRIGORIAN, Samvel Samvelovich**
**Universitetsky pr., 9-269**
**Moscow, 117286(SU)**
Inventor: **GULAKIAN, Karen Armenovich**
**ul. Ramenki, 9/2-247**
**Moscow, 117607(SU)**
Inventor: **SHAKHNAZAROV, Alexandr Aramovich**
**ul. Kolodeznaya, 7-6-25**
**Moscow, 107076(SU)**

(74) Representative: **Clifford, Frederick Alan**
**MARKS & CLERK 57/60 Lincoln's Inn Fields**
**London WC2A 3LS(GB)**

(54) **WATER-SWELLING POLYMER-MINERAL COMPOSITE AND METHOD OF OBTAINING IT.**

(57) A water-swelling polymer-mineral composite comprises bentonite clay and a linear polyanionic polymer, with molecular mass of $10^6$ or more, taken at quantities at which the mass ratio between said polymer and the bentonite clay is 0.05 to 0.10. Said composite is obtained by mixing, in the presence of water, the bentonite clay and the linear polyanionic polymer, with a molecular mass of $10^6$ or more, taken at quantities to give a mass ratio between the said polymer and the bentonite clay of 0.05 to 0.10. The resulting mixture is then dried until the solid desired product is obtained.

Rank Xerox (UK) Business Services

Technical Field

The present invention relates to synthetic materials, and more particularly, it concerns a water-swelling polymer-mineral composite and a process for preparing thereof.

Background Art

A mineral is known to be a clay mortar which is used in hydraulic engineering for colmatation of soil bodies owing to its swelling capacity in the reaction with water.

This phenomenon of bulking power of clays results from penetration of water molecules into a crystalline lattice of clay minerals to form loose structures.

This mineral material has not been widely used because of lacking a cohesive strength of clay aggregates formed in soil.

It is known in the art to use a material as a soil structure-former, which is a mixture containing 25 parts by weight of polyacrylamide gel and 75 parts by weight of a clay or a grinded red brick. This known material is prepared by mixing the polymer with a clay or a powdered red brick with subsequent adding water to the state of "a thick sour cream" and drying the resultant mixture to solidness (SU, A, 139433).

The material obtained has a low efficiency because when applying it into a soil it is quickly decomposed and easily washed away from the soil. But the expanded clay aggregates formed in the soil are still unstable and fail to provide the desired soil structure formation. The soil structurization, moreover, does not occur while using the title material under the repeated wetting of it.

A material is also known to be a carrier, for example, the fired powder of talc, kaolin, bentonite with a water-soluble polymer applied thereon by polymerization of acrylamide monomers in the presence of the above carrier (JP, P, 15151).

According to the process for preparing this material, after polimerization of the title water-soluble monomer the resultant is dried at a temperature of 70 to 80°C to give the end product.

The thus-obtained material is intended for soil stabilization.

On being prefired, however, a crystallization water is removed from the mineral and the latter is decomposed loosing its Water-absorption and swelling ability.

Summary of the Invention

The invention is based on the problem by providing a physicochemical interaction of the starting materials to produce a water-swelling polymer-mineral composite having a swelling power in the reaction of it with water, and a process for preparing thereof in consequence of which there may retain a stable inter-connection of the components of this polymer-mineral composite both in dry or wet state.

The problem is solved by that a water-swelling polymer-mineral composite material comprising a natural mineral substance and a water-soluble polymer, according to the invention contains a bentonite clay as a mineral material and a linear polyanionic polymer having a molecular weight of $10^6$ or above as a polymer, with a mixture weight ratio of polymer: bentonite clay being of 0.05 to 0.10.

According to the invention, the polymer-mineral composite material has a stable and controlled swelling capacity under the repeated wetting and drying, freezing and thawing. The composite material is insoluble and indestructible in water, and it may be expanded about 100 times as much.

It is advisable that this water-swelling polymer-mineral composite material be prepared by a process comprising mixing a natural mineral substance and a water-soluble polymer in the presence of water with subsequent drying the resultant mixture to give the solid end product wherein, according to the invention a bentonite clay as a natural mineral material and a linear polyanionic polymer having a molecular weight of $10^6$ or more as a water-soluble polymer are mixed in the amount providing a mixture weight ratio of the polymer and the clay of 0.05 to 0.10.

Further objects and advantages of the present invention will be apparent from the following detailed description of a water-swelling polymer-mineral composite material, a process for preparing thereof and specific embodiments of the process and the composite material to be obtained.

Best Mode to Carry out the Invention

A water-swelling polymer-mineral composite material according to the invention consists of two components, including a clay with a particle size of 10-50 Å and a water-soluble polymer, which are combined into the aggregated flocks providing their regular structural bond. The decisive effect on the properties of the composite material according to the invention exerts the composition and the structure of either a clay or a water-soluble polymer as well as quantitative ratios of these components. In selecting the clay first of all a cation-exchange capacity and a water absorption were kept in mind. According to the invention, bentonite clays are used for such mineral material.

The second component of the composite according to the invention is a linear polyanionic polymer having a molecular weight of $10^6$ or more, for example acrylamide-acrylic acid copolymer, or a hydrolyzed polyacrylonitrile, or carboxymethyl cellulose.

According to the invention, the weight ratios of the polymer to the title clay are of 0.05 to 0.10.

According to the invention, the efficient ratio of the components of the obtained composite was found by a special series of tests.

Without following the polymer-to-bentonite clay ratio according to the invention the composite material to be obtained swells in water to expand up to 20 times as much.

A polymer-based mineral composite material is a water-insoluble solid substance having a stable, controlled swelling capacity under the repeated watering and drying, freezing and thawing.

These properties are conditioned by the structure of a polymer-mineral composite owing to a physico-chemical (ionic) interaction of its components, namely, the bentonite particles of a lamellar structure and polymer macromolecules. As a result of such interaction of the components there occur the lamination of clay particles and their bonding by polymer molecules.

In applying the composite of the invention into a soil each elementary volume of it retains from 30 to 50 volumes of water. As a result, the water absorption capacity of a soil increases up to 30%. These properties allow the composite material to be used in agrotechnics to increase the water absorption capacity of structureless sandy, lean and other soils along with creation of highly effective greenhouse complexes and hydroponic systems.

A dry material of the invention added in admixture to building ground materials for construction of hydraulic structures / dams, skirtings, floor of channels, water-storage reservoirs / in the amount of 5-10% provides a sharp decrease of the water permeability of corresponding structure units.

In addition, a polymer-mineral composite material of the invention may be used in:

mine working for construction of air - and water proof guards in mines and pits;

fire-prevention technology - for production of effective fire-extinguishing compositions and protection curtains/ fires at oil storage tanks, coal mines, grain storages/;

hole drilling for production of drilling solutions and cementation compositions which are intended for protection of a drilling liquid absorption as well as disintegration of oil-bearing beds;

land reclamation for increasing the water capacity and productivity of highly water-permeable and lean soils; environmental protection for making the safety and long-term shields for the burials of chemical, radioactive and other detrimental wastes and solidification of the liquid types of such wastes.

In all these directions there were carried out the laboratory and partially full-scale tests which exhibited a high effectiveness of the developed production processes including the application of a polymer-mineral composite material of the invention.

A polymer-mineral composite of the invention may be prepared for example, as follows. A mixture of a linear polyanionic polymer having a molecular weight of $10^6$ or more and a bentonite clay is prepared in the presence of water. The weight ratio of the title polymer to the clay should be of 0.05 to 0.10. Thereafter, the resultant mixture is dried to obtain the solid end product. The drying may be carried out at ambient temperature reaching the air-dry state of the product. Subsequently, the product is ground to produce a mono- or polydisperse powder of the polymer-mineral composite having the required granulometric composition.

The drying may be carried out in the special ovens at a temperature of 100°C. As a result, there is obtained either a powdery product, or the solid which is further ground.

The present invention makes it possible to obtain a water-swelling polymer-mineral composite material with a controlled swelling capacity depending on the nature of a water-soluble polymer to be used and the selected weight ratio of the components.

For a better understanding of the present invention the following Examples of its specific embodiment are given.

Example 1

By using a mechanical stirrer 50 g of a bentonite clay and 5.0 g of acrylamide-acrylic acid copolymer having a molecular weight of $1.5.10^6$ were mixed in 945.0 g of water. Thereafter, the resultant homogeneous mixture was dried at 20°C. The dried mixture, which was a solid, fragile substance, was dried to obtain a mono- or polydisperse powder.

The resultant powder was coated with water. As a result, the powder was expanded (a water absorption capacity was 1500% by weight) and formed loose, clody structure/ the clods retained their shape without sticking each other/.

In drying the swelled powdery component again there occurred the bonding of particles into the unit homogeneous mass. In subsequent watering it the swelling capacity was retained. The multiple tests (up to 10 times) showed the complete retention of the swelling capacity.

Example 2

By using a mechanical stirrer 100 g of a bentonite clay and 5.0 g of carboxymethyl cellulose having a molecular weight of $1.5.10^6$ were mixed in the presence of 895 g of water. The resultant homogeneous mixture was dried at 90°C in drying oven.

After grinding the dried solid and fragile material it was covered with water, with the swelling capacity of the powder being under observation/a water absorption capacity Was 700% by weight/.

In drying the swelled powder, again there occurred the bonding of particles into the unit homogeneous mass. In subsequent watering it the swelling capacity was retained. The multiple tests (up to-10 times) showed the complete retention of the swelling capacity.

Example 3

By using a mechanical stirrer 100 g of a bentonite clay and 5 g of acrylamide - acrylic acid copolymer having a molecular weight of $4.5.10^6$ were mixed in the presence of 895 g of water. Thereafter, the resultant homogeneous mixture was dried in a drying oven at 95°C. After grinding to the powdery state of the obtained solid product it was coated with water, with the swelling capacity being under observation (a water absorption capacity was 2000 to 3000% by weight ).

In drying the swelled powder there occurred bonding of its particles into the unit homogeneous mass. In subsequent watering the swelling capacity was retained.

The repeated tests (up to 10 times) showed the complete retention of the swelling capacity.

Example 4

By using a mechanical stirrer 75.0 g of a bentonite clay and 5.0 g of acrylamide-acrylic acid copolymer having a molecular weight of $3.0.10^6$ were mixed in the presence of 920.0 g of water. Then, the resultant mixture was dried at ambient temperature (20-25°C). The resultant fragile solid was grinded to give a mono-or polydisperse powder.

Into a laboratory glass the powdery product was placed followed by addition of water in the amount equal to a 80-fold mass of the product. After saturating the polymer-mineral composite with water completely (48 hours) the retention volume of water was determined. The water absorption capacity of the powdery product was 2000 % by weight.

In repeating the drying of the swelled powder there occurred the aggregation of its particles into the unit homogeneous mass. In subsequent watering the swelling capacity was retained.

The repeated tests / up to 10 times/ showed the complete retention of the swelling capacity of the end product.

Example 5

By using a mechanical stirrer 100 g of a bentonite clay and 5 g of a hydrolyzed polyacrylonitrile having a molecular weight of $1.2.10^6$ in the presence of 895 g of water. Thereafter, the resultant homogeneous mixture was dried at ambient temperature (20-25°C). The resultant fragile solid was grinded to give a mono-or polydisperse powder.

Into a laboratory glass the powdery product was placed followed by addition of water in the amount equal to a 80-fold mass of the product. The water absorption power, characterizing its swelling capacity was 1000% by weight.

The repeated drying and the further watering ( up to 10 times ) showed the complete retention of the swelling capacity of the product.

Industrial Applicability

The invention will find application in hydrotechnical construction for production of coats of water-storage reservoirs, channels, dams; industrial-and-civil engineering for making waterproof curtains of underground constructions, abutment joints and flat roofs of buildings in melioration measures; fire extinguishment; a hole drilling to carry out the plug up of absorption zones and an interlayer insulation. The invention may also be used in oil production for increasing its extraction from an oil-bearing bed; mine working for construction of air- and waterproof partitions in mines and pits. It may also be in use for protection from the burials of chemical wastes.

**Claims**

1. A water-swelling polymer-mineral composite material comprising a natural mineral material and a water-soluble polymer, characterized in that it contains a bentonite clay as a mineral substance and a linear polyanionic polymer having a molecular weight of $10^6$ or more, with the following weight ratio of the the polymer to the title clay equal to 0.05 - 0.10.

2. A process for preparing a water-swelling polymer-mineral composite material according to claim 1, comprising mixing a natural mineral material and a water-soluble polymer with subsequent drying of the resultant mixture to give the end solid product, characterized in that a bentonite clay as a natural mineral substance is mixed with a linear polyanionic polymer having a molecular weight of $10^6$ or more as a polymer, taken in the amount providing a weight ratio of the polymer to the title clay equal to 0.05 - 0.10.

# INTERNATIONAL SEARCH REPORT

International Application No PCT/SU 90/00195

**I. CLASSIFICATION OF SUBJECT MATTER** (if several classification symbols apply, indicate all) [6]

According to International Patent Classification (IPC) or to both National Classification and IPC

IPC.[5]    C09K 17/00

**II. FIELDS SEARCHED**

| Minimum Documentation Searched [7] | |
|---|---|
| Classification System | Classification Symbols |
| IPC.[5] | C09K 17/00 |

Documentation Searched other than Minimum Documentation
to the Extent that such Documents are Included in the Fields Searched [8]

**III. DOCUMENTS CONSIDERED TO BE RELEVANT [9]**

| Category [*] | Citation of Document, [11] with indication, where appropriate, of the relevant passages [12] | Relevant to Claim No. [13] |
|---|---|---|
| A | SU, A1, 139433 (V. I. Shtatnov et al.) 10 July 1961 (10.07.61) | 1,2 |
| A | GB, A, 2030155 (AMERICAN COLLOID COMPANY), 02 April 1980 (02.04.80), the abstract | 1,2 |
| A | DE, A1, 3328098 (R.HUBENY GMBH), 21 February 1985 (21.02.85), the abstract | 1,2 |
| A | US, A, 4669920 (ALLIED COLLOIDS LTD.), 02 June 1987 (02.06.87), the abstract | 1,2 |

\* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 15 March 1991 (15.03.91) | 25 April 1991 (25.04.91) |
| International Searching Authority | Signature of Authorized Officer |
| ISA/SU | |

Form PCT/ISA/210 (second sheet) (January 1985)